(19) Europäisches Patentamt
European Patent Office
Office européen des brevets

(11) **EP 3 037 151 B1**

(12) **FASCICULE DE BREVET EUROPEEN**

(45) Date de publication et mention
de la délivrance du brevet:
**26.04.2017 Bulletin 2017/17**

(51) Int Cl.:
***B01J 20/02*** *(2006.01)*    ***C25B 15/02*** *(2006.01)*
***C25B 1/00*** *(2006.01)*    ***B01D 53/96*** *(2006.01)*
***B01J 20/34*** *(2006.01)*    ***B01D 53/02*** *(2006.01)*

(21) Numéro de dépôt: **15201746.3**

(22) Date de dépôt: **21.12.2015**

(54) **PROCÉDÉ ET DISPOSITIF DE RÉGÉNÉRATION DE PIÈGE À OXYGÈNE**

REGENERIERUNGSVERFAHREN UND VORRICHTUNG EINES
SAUERSTOFFRADIKALFÄNGERS

METHOD AND APPARATUS FOR REGENERATING AN OXYGEN TRAP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2014 FR 1463105**

(43) Date de publication de la demande:
**29.06.2016 Bulletin 2016/26**

(73) Titulaires:
  • **UNIVERSITE JOSEPH FOURIER**
    **38041 Grenoble Cedex 09 (FR)**
  • **CENTRE NATIONAL DE LA RECHERCHE
    SCIENTIFIQUE**
    **75794 Paris Cedex 16 (FR)**

(72) Inventeurs:
  • **DESEURE, Jonathan**
    **73190 Challes les Eaux (FR)**
  • **STEIL, César Marlu**
    **38500 Voiron (FR)**

(74) Mandataire: **Brevalex**
    **95, rue d'Amsterdam**
    **75378 Paris Cedex 8 (FR)**

(56) Documents cités:
    **WO-A1-95/32050**    **FR-A1- 2 770 149**
    **US-A- 3 963 597**    **US-A- 5 334 237**

  • **FOULETIER J ET AL: "Electrically renewable and
    controllable oxygen getter", VACUUM,
    PERGAMON PRESS, GB, vol. 25, no. 7, 1 juillet
    1975 (1975-07-01), pages 307-314, XP024678405,
    ISSN: 0042-207X, DOI:
    10.1016/0042-207X(75)90731-9 [extrait le
    1975-07-01]**

**EP 3 037 151 B1**

**Description**

**DOMAINE TECHNIQUE ET ÉTAT DE LA TECHNIQUE ANTÉRIEURE**

L'invention concerne le domaine des pompes ou pièges à oxygène, encore appelés « getter ».

Les pièges à oxygène sont une solution technique fiable afin d'éliminer toutes traces de polluants oxygénés dans un gaz. Ainsi l'utilisation, à haute température (entre 600°C et 900°C) d'un getter d'oxygène régénérable a été proposée dès 1973 dans le document US 3,963,597. Le dispositif proposé dans ce document s'appuie sur la différence de potentiel thermodynamique entre l'oxyde de zirconium partiellement réduit et les polluants (dans l'ordre des potentiels, du plus élevé au plus faible : $CO_2$>$H_2O$>CO>NO). Pour cela, la zircone stabilisée par l'yttrium à 8% molaire réduite est une bonne candidate. En effet, elle présente une très bonne stabilité sous gaz réducteur, notamment sous hydrogène, et un excellent recul dans sa mise en forme.

Ce document décrit notamment une variante pour un fonctionnement en continu. Mais la variation de volume existant pendant la réduction, puis la ré-oxydation, ne permet pas une étanchéité fiable pour un mode de fonctionnement continu. Le courant de réduction est déterminé à partir de l'estimation du niveau de pollution du gaz entrant dans la cellule.

Le document de J. Foultier et al., Vacuum, 25, 1975, 307 propose une solution solide $ZrO_2$(0.86) $Y_2O_3$(0.1)$CeO_2$(0.04) ou $ZrO_2$(0.9)$Y_2O3$(0.09)$CeO_2$ (0.01). Il y est montré que 100 grammes d'un tel piège peuvent piéger 1 Nl de dioxygène. Selon l'article « Actualités chimie » N°1534-3, Juillet 1974, pages 24-28, après 6 mois d'utilisation et plus de 50 cycles de régénération, l'échantillon ne présente pas de dégradation. Enfin, sous argon, la performance d'élimination de pollution dépend grandement du flux de gaz traversant le piège. On a montré, par des simulations numériques, ainsi que par l'étude des nombres adimensionnels (Pe, Sc, Sh), que cela dépendait de la nature du gaz (dihydrogène ou argon). Dans ce type de technique, après piégeage de l'oxygène par le matériau constitutif du piège, puis saturation en oxygène de ce matériau, se pose le problème de sa régénération.

Elle est obtenue par circulation d'un courant, comme décrit dans les documents cités ci-dessus.

Bien que très simple, cette technique n'a jamais pu être automatisée. Selon les techniques connues de régénération, on change la nature du gaz traversant la cellule et on mesure, par impédance hautes fréquences, le niveau de ré-oxydation du piège. Enfin la réversibilité de cette régénération sous gaz fortement réducteur (hydrogène) n'a jamais été clairement été démontrée.

Les besoins pour ce type de dispositif « getter » croissent avec les applications de l'hydrogène. L'hydrogène pur est principalement préconisé pour les applications en chimie analytique (CPG). Le conditionnement de l'hydrogène pour le stockage hydrure doit tenir compte des contraintes imposées par le réservoir d'hydrure en matière de tolérance vis-à-vis de la présence d'oxygène ($\leq$10 ppm d'$O_2$).

Il est donc important de proposer une solution fiable et robuste pour garantir une pureté élevée d'un gaz, tel que l'hydrogène. Enfin pour l'utilisation de l'hydrogène par des pile à combustible, du fait de la diversité des sources d'hydrogène possible, il est là aussi important d'avoir une qualité garantie, en termes de pureté vis-à-vis d'autres polluants oxygénés, par exemple le monoxyde de carbone (< 60 ppm de CO).

Il se pose donc le problème de trouver un nouveau procédé de régénération du matériau constitutif d'un piège à oxygène.

Par ailleurs, dans les procédés de régénération connus, l'arrêt de la régénération est réalisé de manière arbitraire, sans critère bien établi.

Il se pose donc également le problème de trouver un procédé de régénération du matériau constitutif d'un piège à oxygène qui permette de déterminer un critère aisé d'arrêt de la régénération.

Un tel procédé de régénération du matériau constitutif d'un piège à oxygène est de préférence automatisable, permettant un arrêt de la régénération sur la base d'un critère objectif et/ou d'un paramètre aisément déterminable ou calculable.

**EXPOSÉ DE L'INVENTION**

L'invention vise à résoudre ces problèmes.

Elle concerne d'abord un procédé de régénération d'un piège à oxygène, comportant au moins les étapes suivantes:

> a) faire circuler un courant électrique dans le matériau du piège, pour réduire ce dernier,
> b) mesurer la valeur $I_m$ dudit courant électrique et estimer sa dérivée $dI_m/dt$ par rapport au temps,
> c) estimer la longueur ($\delta$) de matériau, qui est réduite par ledit courant électrique, en fonction de la valeur dudit courant ($I_m$) et de sa dérivée ($dI_m/dt$),
> d) arrêter la circulation du courant électrique lorsque la longueur de matériau réduit est au moins égale à une valeur seuil ($\delta_s$).

La longueur de matériau réduit peut être fonction du rapport $I_m^2/(dI_m/dt)$ entre le carré du courant mesuré et sa dérivée.

On peut mesurer ou estimer, en outre, la contribution, au courant mesuré, des réductions électrochimiques des polluants de l'environnement du piège.

On peut ensuite estimer la longueur ($\delta$) de matériau, qui est réduite, en fonction de la valeur du courant mesuré ($I_m$), de sa dérivée ($dI_m/dt$) et de la contribution, au courant mesuré, des réductions électrochimiques des polluants.

A cette fin, on peut mesurer ou enregistrer la valeur du courant résiduel $I_P = I(dI/dt=0)$, pour une dérivée nulle ou proche de zéro du courant, par exemple à différence de potentiel nul ou en interrompant la circulation du courant; on peut alors estimer la longueur de matériau réduit en fonction de la valeur du courant ($I_m$), de sa dérivée ($dI_m/dt$) et de la valeur du courant ($I(dI/dt=0)$) pour une dérivée nulle ou proche de zéro de celui-ci. L'interruption du courant et la mesure de la valeur du courant ($I_p$), notamment pour une dérivée nulle ou proche de zéro de celui-ci, peuvent être effectuées à intervalles de temps réguliers, par exemple compris entre 5s et 100s.

En variante, on peut estimer la valeur instantanée (maximale) du courant lors de l'interruption de celui-ci ou de la régénération; cette valeur peut alors être dix à cent fois supérieure à $I_p = I(dI/dt=0)$ et cette méthode peut donc être accompagnée par une calibration (de $I_p \propto I_{inst\Delta E=0}$) (calibration qui dépend de la fréquence d'acquisition).

Enfin il existe d'autres méthodes qui peuvent être employées pour déterminer l'influence, sur $I_m$, de la concentration de cette pollution qui environne le guetteur ou sa surface ou la contribution, au courant mesuré $I_m$, des réductions électrochimiques des polluants de l'environnement : voltamétrie rapide, ou technique de créneaux de potentiel, ou encore spectroscopie d'impédance complexe à basses fréquences. Ces méthodes peuvent être accompagnées d'une étape de calibration ; une corrélation relie leurs résultats à $I_p$.

La longueur estimée de matériau peut être fonction du rapport $I_m(I_m - I_p)/(dI_m/dt)$ entre, d'une part, le produit du courant et du courant corrigé du courant lié à la pollution en oxygène du gaz circulant autour du piège et, d'autre part, la dérivée du courant.

La régénération peut avoir lieu, par exemple, à une température comprise entre 600°C et 900°C.

L'invention concerne également un dispositif de régénération d'un piège à oxygène, comportant au moins:

    a) des moyens pour faire circuler un courant dans le matériau du piège, pour réduire ce dernier,
    b) des moyens pour mesurer la valeur dudit courant et calculer sa dérivée,
    c) des moyens pour estimer la longueur de matériau qui a été réduit en fonction de la valeur dudit courant et de sa dérivée,
    d) des moyens pour arrêter la circulation du courant lorsque la longueur de matériau réduit est égale à une valeur seuil.

Des moyens peuvent être prévus pour mesurer ou estimer la contribution, au courant mesuré, des réductions électrochimiques des polluants de l'environnement du piège.

Des moyens peuvent permettre d'estimer la longueur ($\delta$) de matériau, qui est réduite, en fonction de la valeur du courant mesuré ($I_m$), de sa dérivée ($dI_m/dt$) et de la contribution, au courant mesuré, des réductions électrochimiques des polluants.

Un tel dispositif peut en outre comporter des moyens pour mesurer ou enregistrer la valeur du courant résiduel $I_P = I(dI/dt=0)$, pour une dérivée nulle ou proche de zéro du courant, par exemple à différence de potentiel nul ou en interrompant la circulation du courant; des moyens permettent alors d'estimer la longueur de matériau réduit en fonction de la valeur du courant ($I_m$), de sa dérivée ($dI_m/dt$) et de la valeur du courant ($I(dI/dt=0)$) pour une dérivée nulle ou proche de zéro de celui-ci. De préférence, des moyens d'interruption du courant, notamment pour une dérivée nulle ou proche de zéro de celui-ci, permettent de mesurer la valeur du courant ($I_p$) à intervalles de temps réguliers, par exemple compris entre 5s et 100s.

En variante, des moyens permettent une interruption de la régénération et des moyens permettent d'estimer la valeur instantanée (maximale) du courant lors de cette interruption; cette valeur peut alors être dix à cent fois supérieure à $I_p = I(dI/dt=0)$ ; des moyens peuvent donc être prévus pour une calibration (de $I_p \propto I_{inst\Delta E=0}$) (calibration qui dépend de la fréquence d'acquisition).

Enfin des moyens peuvent être prévus pour mettre en oeuvre d'autres méthodes qui peuvent être employées pour déterminer l'influence, sur $I_m$, de la concentration de la pollution qui environne le guetteur ou sa surface ou la contribution, au courant mesuré $I_m$, des réductions électrochimiques des polluants de l'environnement : voltamétrie rapide, ou technique de créneaux de potentiel, ou encore spectroscopie d'impédance complexe à basses fréquences. Des moyens permettent une calibration et/ou une corrélation pour relier les résultats à $I_p$.

Des moyens peuvent être prévus ou programmés pour:

-    interrompre la circulation du courant et pour mesurer la valeur du courant ($I_P = I(dI/dt=0)$), pour une dérivée nulle ou proche de zéro de celui-ci et/ou mesurer la valeur maximal du courant lors de l'interruption ou toutes autres méthodes classiques électrochimiques permettant de déterminer la concentration de polluant et d'en déduire $I_P$,

- et/ou pour déclencher les moyens pour faire circuler un courant dans le matériau du piège, afin de réduire ce dernier.

Dans un procédé ou un dispositif selon l'invention le matériau du piège est par exemple une solution solide usuellement employée comme électrolyte solide dans le pile à combustible haute température à oxyde solide.

Le matériau « guetteur » est par exemple toute solution solide de type ZrYO ou ZrScO, avec ou sans double substitutions (de $Y_2O_3$ ou $Sc_2O_3$ , soit par $CeO_2$ soit par $Al_2O_3$) ; en variante, ce peut être une structure comme $ThO_2^-$ et $LaGaO_3^-$ similaire aux bases $ZrO_2^-$ (pour ces diverses compositions, le signe « $^-$ « indique la charge d'un ion négatif), avec ou sans double substitutions (de $Y_2O_3$ ou $Sc_2O_3$, soit par $CeO_2$ soit par $Al_2O_3$). On peut également citer les mélanges $8(Y_2O_3)10 (Al_2O_3)$.

A titre d'exemple, on peut utiliser une solution à base de Zirconium telle que $Zr_{1-x}Y_xO_{2-x/2}$ ou $Zr_{1-x}Sc_xO_{2-x/2}$ pour x compris entre 0.03 et 0.11. On peut aussi utiliser une solution solide à double substitution, comme $ZrO_2(0.86)Y_2O_3(0.1)CeO_2 (0.04)$ ou $ZrO_2(0.9)Y_2O_3(0.09)CeO_2(0.01)$.

Le matériau du piège peut avoir une forme allongée, par exemple cylindrique ou parallélépipédique, éventuellement creux, ou la forme d'une pastille ou d'un tube creux, par exemple à section circulaire ou rectangulaire ou carrée. Il peut être dense ou poreux.

L'invention permet l'automatisation simple du contrôle des régénérations d'un piège à oxygène.

## BRÈVE DESCRIPTION DES DESSINS

La figure 1 représente un piège à oxygène.
La figure 2 représente un dispositif de régénération d'un piège à oxygène, mettant en oeuvre l'invention.
La figure 3 représente un suivi de $I_m(I_m-I_P)/(dI_m/dt)$ en fonction du temps.
La figure 4 est un exemple de suivi du courant $I_m$ en fonction du temps, dans le cadre d'un procédé selon l'invention.
La figure 5 est un exemple de suivi du courant $I_m$ en fonction du temps, dans le cadre d'un procédé selon l'invention, avec détermination de $I_p$.
La figure 6 est un exemple de procédé selon l'invention.
Les figures 7A et 7B sont des exemples de dispositif de purification de gaz, auxquels peut être appliquée l'invention.
Les figures 8A et 8B sont des exemples de formes de pièges à oxygène.

## EXPOSÉ DÉTAILLÉ DE MODES DE RÉALISATION PARTICULIERS

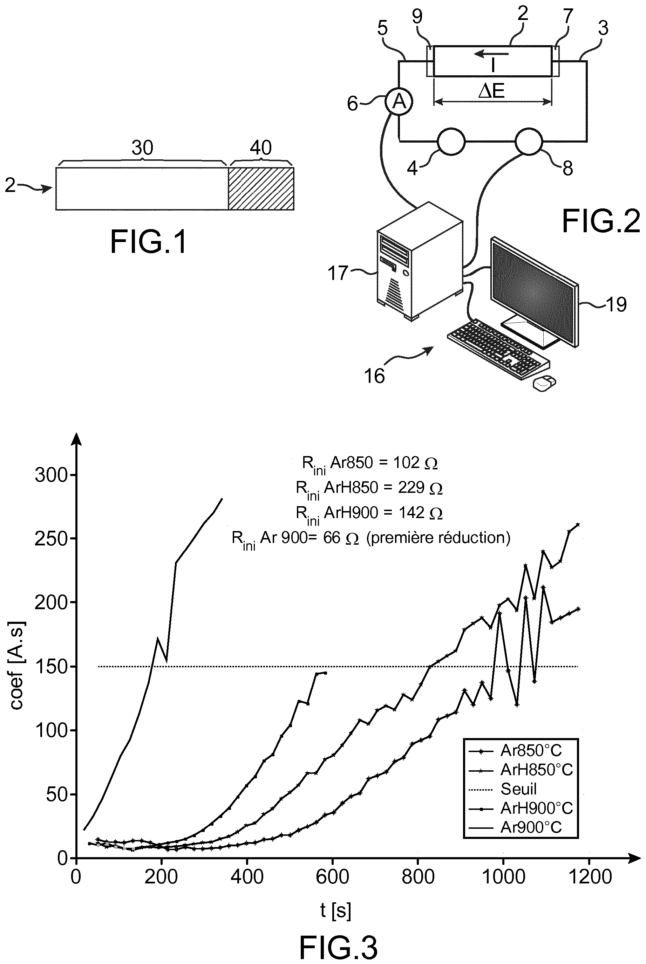

La figure 1 représente schématiquement un barreau 2, ou échantillon, pouvant être mis en oeuvre dans le cadre de l'invention.

C'est par exemple un échantillon de zircone stabilisée par l'yttrium à 8% molaires (YSZ), stable sous atmosphère réductrice.

La performance de piège n'était pas avérée sur cette solution solide. On a préalablement testé son endurance en effectuant une dizaine de cycles de réduction et de ré-oxydation. On a également démontré cela était possible sous atmosphère d'hydrogène.

En variante on peut utiliser, en tant que matériau « guetteur », toute les solutions solides de type ZrYO ou ZrScO, avec ou sans double substitutions (de $Y_2O_3$ ou $Sc_2O_3$, soit par $CeO_2$ soit par $AlO_3$) mais aussi toutes les structures comme $ThO_2^-$ et $LaGaO_3^-$ similaires aux bases $ZrO_2^-$, avec ou sans double substitutions (de $Y_2O_3$ ou $Sc_2O_3$, soit par $CeO_2$ soit par $Al_2O_3$). On peut également citer les mélanges $8(Y_2O_3)10 (Al_2O_3)$.

A titre d'exemple, on peut utiliser une solution à base de Zirconium telle que $Zr_{1-x}Y_xO_{2-x/2}$ ou $Zr_{1-x}Sc_xO_{2-x/2}$ pour x compris entre 0.03 et 0.11. On peut aussi utiliser une solution solide à double substitution, comme $ZrO_2(0.86)Y_2O_3(0.1)CeO_2(0.04)$ ou $ZrO_2(0.9)Y_2O_3(0.09)CeO_2(0.01)$.

Les inventeurs ont pu établir que le comportement du getter obéit à une dynamique qui semble exclusivement, ou principalement, liée au processus de ré-oxydation du matériaux, et non à l'inertie du gaz comme cela était décrit lors des travaux effectués sous argon, notamment par J. Foultier et al., Vacuum, 25, 1975, 307.

Un getter à oxygène, fonctionnant sous atmosphère d'hydrogène, peut capter une grande quantité de polluant (notamment lors de pics de pollution) en un temps très court, du fait de la diffusivité très grande des polluants dans l'hydrogène. La simulation numérique sous code CFD ainsi que l'étude des nombres adimensionnels (Pe, Sc, Sh) prouvent que la vitesse de balayage influence peu les performances du piège, l'hydrogène ayant une très bonne diffusivité thermique et un coefficient de diffusion binaire très élevé.

Des tests de régénération ont été menés par les inventeurs, mettant en évidence un comportement singulier de la céramique, jamais reporté dans la littérature.

On en propose ci-dessous une modélisation, simple et robuste, permettant d'expliquer ce comportement.

Cette modélisation permet de contrôler l'état de réduction par une mesure du courant en fonction du temps.

Dans l'échantillon de guetteur (dont le matériau, comme indiqué ci-dessus, est de la zircone stabilisée par l'yttrium), illustré en figure 1, partiellement oxydé, on distingue une zone 30 de zircone non réduite et une zone 40 de zircone noire (réduite). Ces deux zones sont délimitées par un front de réduction 32, supposé plan.

On appelle $V_T$ (en $m^3$) le volume de l'échantillon et S (en $m^2$) sa section.

Comme illustré en figure 2, cet échantillon peut être incorporé dans un circuit comportant une source de tension 4, des moyens 6 de mesure d'un courant qui circule dans l'échantillon, l'ensemble étant relié en série par des connexions électriques 3, 5. L'échantillon 2 est muni d'électrodes 7, 9. On applique donc une différence de potentiel ou une tension aux bornes de l'échantillon. On note $\Delta E$ cette tension (en V).

Par caractérisation électrochimique préalable (par exemple par spectroscopie d'impédance complexe à haute fréquence), on peut déterminer une conductivité ionique effective $\sigma_{ion}^{eff}$, qui dépend de la morphologie (porosité) de l'échantillon.

On peut en déduire un courant d'échange $K_0$ (en $A/m^2$); ces valeurs dépendent également de la morphologie de l'échantillon, en particulier de sa surface active, il a été constaté également que $K_0$ dépendait de la gamme de température ($\pm$ 20°C) et de la gamme de potentiel appliqué ($\pm$0.5V).

Enfin, sur la base de la nature de la solution solide et de sa porosité, on peut estimer la concentration $C_1$ (en $mol/m^3$), en oxygène réductible présent dans le matériau. Cette concentration est donnée par:

$$C_i = \frac{X_i}{V_i}$$

avec i : 1 ou 2

Il s'agit en fait du nombre de moles d'oxygène échangeable dans la longueur régénérable. $X_1$ représente le nombre d'atomes d'oxygène qui peuvent être échangés avec le gaz extérieur, qui environne le getter. $X_2$ représente les oxygènes, impliqués dans des échanges internes, mais dont on ne connait pas la nature physico-chimique et $C_2$ est leur concentration.

Soit la loi d'Ohm exprimée à partir de cette analyse :

$$\Delta E_{ion} = \frac{X_1 C_1}{S\,\sigma_{ion}^{eff}} I_T \qquad (1)$$

Où $\Delta E_{ion}$ est la différence de potentiel ionique non mesurable.

La loi de surtension électrochimique linéarisée suivante est proposée, pour $X_2 \geq 0$ et $0 \leq X_1 \leq C_1 V_T$ (ces 2 inégalités sont en fait toujours vérifiées, car elles correspondent au bilan matière dans la céramique):

$$I_f(t) = I_{f,1}(t) + I_{f,2}(t) = K_0 \frac{|\Delta E - \Delta E_{ion}|}{|\Delta E|} + K_0' \frac{|\Delta E - \Delta E_{ion}|}{|\Delta E|} \left( \frac{X_2}{C_2 \left( V_T - \frac{X_1}{C_1} \right)} \right)^n$$

$$(2a)$$

Dans cette égalité, $I_f(t)$ représente le transfert de charge s'effectuant au sein du barreau ou de l'échantillon, lors de la polarisation $I_{f,1}(t)$ est le transfert de charge lié à la réoxydation du barreau, $I_{f,2}(t)$ représente les échanges d'oxygène dans le barreau.

Sous forte pollution, on a remarqué qu'il était possible d'observer un courant ($I_p$) lié à la réduction électrochimique des polluants. Il n'est pas possible de relier ce courant à une loi de surtension, mais on utilise tout de même une expression de densité de courant le représentant :

$$I_T = I_f + I_p \qquad (2b)$$

Pour $X_2 = 0$, l'expression (2a) se réduit à :

$$I_f(t) = I_{f,1}(t) = K_0 \frac{|\Delta E - \Delta E_{ion}|}{|\Delta E|} \qquad (2c)$$

Le bilan de matière et de charge est alors exprimé par la loi d'évolution de $X_1$ et $X_2$ ; pour $X_2 \geq 0$ :

$$\frac{dX_2}{dt} = -\frac{I_{f,2}}{2F} S \qquad (3a)$$

Et pour $0 \leq X_1 \leq C_1 V_T$ :

$$\frac{dX_1}{dt} = -\frac{I_{f,1}}{2F} S \qquad (3b)$$

avec F la constante de Faraday (C/mol).

L'opérateur (ou l'automate) connaît $I_m$ (le courant mesuré) et $\Delta E$ (le potentiel appliqué aux bornes de l'échantillon). Ces valeurs peuvent être mémorisées.

Si on note :

$$I_m = \left(I_f + I_p\right)S \qquad (4a)$$

En supposant que la constante de temps du courant lié à la pollution est inférieure à la constante qui correspond à la régénération interne de la céramique :

$$\frac{dI_m}{dt} = \frac{dI_f}{dt} S \qquad (4b)$$

Afin de connaitre le niveau de ré-oxydation on recherche $X_1$ (quantité d'oxygène disponible lors de la ré-oxydation).

La position du front s'exprime par :

$$(V_T - X_1/C_1)/S$$

Par analyse des équations (2a) et (3a), on montre, par combinaison des équations (2c) et (3b) que, pour $dI_m/dt \geq 0$ (le cas $dI_m/dt < 0$ correspond uniquement à des échanges internes, sans réduction ou régénération), la position du front de $\delta$ peut s'écrire:

$$\delta = L_{Régenerable} - \frac{1}{C_1 S 2F} \frac{I_m(I_m - I_P)}{\frac{dI_m}{dt}} + \frac{\Delta E}{K_0} \sigma_{ion}^{eff}$$

$L_{régénérable}$ représente la longueur qu'il est possible de régénérer ($L_{régénérable}$ peut être prise légèrement inférieure à la longueur du barreau pour tenir compte de l'encombrement des électrode). Les deuxièmes et troisièmes parties du 2ème membre (qui sont les termes en $-1/C_1 S 2F$ et en $\Delta E/K_0$) de l'expression ci-dessus donnent la longueur réduite.

Ainsi $\delta$ peut avoir une valeur supérieure à $L_{Régénérable}$ du fait du courant lié à la pollution $I_P$, lequel peut être déterminé par un courant à $I_{\frac{dI}{dt}=0}$ et/ou par mesure de la valeur maximale du courant lors de l'interruption ou par toute autre méthode électrochimique permettant de déterminer la concentration de polluant et d'en déduire $I_P$. Ce dernier terme est la contribution, au signal, due des échanges liés à la réduction électrochimique des polluants de l'environnement.

Grâce à des mesures électrochimiques, par exemple par voltampérométrie ou impédance électrochimique complexe, il est possible de déterminer $\frac{\Delta E}{K_0}\sigma_{ion}^{eff}$, mais avec une précision variable selon la température de fonctionnement ($\pm$ 10% à 900°C et $\pm$ 20% à 800°C). Par mesure géométrique et coulombmètrie, lors des régénérations totales, et quelle que soit la température, il est possible de déterminer $\frac{1}{C_1 S2F}$ à $\pm 5\%$.

Grace à cette connaissance fine du système sous polarisation il est aisé d'arrêter la régénération quand $\delta$ atteint une valeur de consigne $\delta_s$: tant que $\delta$, calculé par la formule ci-dessus, ou une formule similaire, reste inférieur à cette valeur seuil $\delta_s$, la régénération est poursuivie. Elle est arrêtée lorsque $\delta$, estimé ou calculé par la formule ci-dessus, ou une formule similaire, devient égale ou supérieure à cette valeur seuil $\delta_s$.

De plus la pollution peut évoluer; pour en tenir compte, il est possible, par simple interruption de courant de régénération, de mesurer ou d'enregistrer $I_p$, par exemple à intervalle temporel régulier, par exemple toutes les 5 ou 10 secondes.

Comme indiqué plus haut les paramètres S et $\sigma_{ion}^{eff}$ $k_0$, $C_1$ peuvent être déterminés ou estimés. De plus le pourcentage d'incertitude établi sur chacun des paramètres permet de dimensionner la longueur réductible.

La formule ci-dessus montre que la position du front dépend de $I^2_m/(dI_m/dt)$ ; si l'atmosphère n'est pas pure, cette position dépend de $I_m(I_m - I_P)/(dI_m/dt)$.

$dI_m/dt <0$ correspond à des échanges, internes à l'échantillon, qui sont très rapides.

Le cas $dI_m/dt =0$ correspond au cas où l'échantillon échange de l'oxygène avec l'extérieur de l'échantillon.

$dI_m/dt >0$ correspond au cas où de l'oxygène est libéré vers l'atmosphère extérieure à l'échantillon (il s'agit là d'une situation de régénération, car de l'oxygène est libéré de l'échantillon).

Les mesures du courant peuvent être réalisées à l'aide d'un ampèremètre 6, disposé en série avec le barreau ou l'échantillon 2.

Les valeurs de courant peuvent être transmises à des moyens 16 de traitement de données.

Ces moyens 16 comportent par exemple un ordinateur ou un micro-ordinateur ou un calculateur ou un microprocesseur programmé pour mémoriser et traiter des données de courant, par exemple les données fournies par les moyens 6, et des données pour mettre en oeuvre un procédé selon l'invention. Peut ainsi être estimée ou calculée la valeur $\delta$ du front de régénération.

Par exemple une unité centrale 17 est programmée pour mettre en oeuvre un procédé de traitement selon l'invention. En particulier peuvent être mesurées ou estimées les valeurs de courant I pour dI/dt=0 ou la valeur maximale ($I_{inst\Delta E=0}$) du courant lors de l'interruption de la régénération. Les valeurs de $dI_m/dt$ peuvent être estimées par un calcul de dérivation numérique (méthode dite « naïve »), par exemple pour un pas de temps imposé par l'opérateur (exemple : 5 à 100 secondes). En variante, les moyens 17 mettent en oeuvre une autre méthode, par exemple par par voltamétrie rapide, ou par technique de créneaux de potentiel, ou par spectroscopie d'impédance complexe à basses fréquences. Ces méthodes peuvent être accompagnées d'une étape de calibration et la corrélation qui relie leurs résultats à Ip peut être plus ou moins complexe.

Par ailleurs, les valeurs de $\frac{\Delta E}{K_0}\sigma_{ion}^{eff}$ et de $\frac{1}{C_1 S2F}$ peuvent avoir été préalablement mesurées et être également mémorisées dans les moyens 17.

A partir de ces données, les moyens 17 peuvent estimer ou calculer la valeur $\delta$ du front de régénération.

Ces moyens 17 peuvent permettre également de comparer cette valeur de $\delta$ avec une valeur seuil et de commander l'interrupteur 8 qui permet d'arrêter le courant la circulation du courant de régénération dans l'échantillon 2.

Sur l'écran ou les moyens 19 de visualisation on peut par exemple afficher l'évolution du courant mesuré, en fonction du temps, et/ou l'évolution de $\delta$.

La figure 3 représente différents suivis du critère $I_m(I_m-I_p)/(dI_m/dt)$, avec $I_P$ proche 0. Les résistances initiales ont été mesurées aux bornes d'un barreau parallélépipédique de matériaux 8YSZ (zircone stabilisée par l'yttrium à 8% molaires (YSZ)), dense. La technique de mesure utilisée est l'impédance à haute fréquence. Les températures de fonctionnement sont 900°C et 850°C. Ces résistances présentent une forte variabilité selon l'historique des régénérations précédentes. Le critère $I_m(I_m - I_p)/(dI_m/dt)$ a été mesuré lors de réductions sous argon (Ar) et Argon hydrogéné à 3% (ArH). Lors de la régénération sous ArH à 900°C, la régénération a été arrêtée pour une valeur cible de 150 A.s.

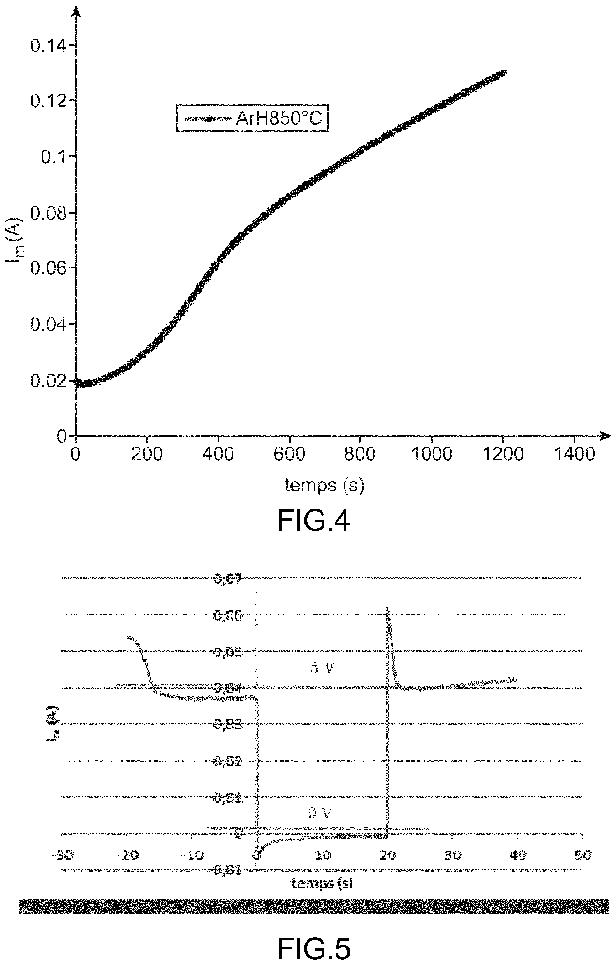

La figure 4 représente le suivi du courant en fonction du temps pour un gaz d'argon hydrogéné à 3% à 850°C, sous une polarisation de 5 V (même cas que pour la figure 3).

La figure 5 représente, pour un échantillon cylindrique poreux à 850°C, sous argon, le suivi du courant d'une réduction sous 5 V et un exemple de technique de détermination de Ip. Après 200 secondes de réduction d'un échantillon déjà partiellement réduit (qui est le cas le plus complexe), on interrompt le processus de régénération et on mesure le courant au court-circuit (potentiel nul) : c'est la technique de l'interruption de courant. Dans le présent cas on a mesuré

$I_P = I(dI/dt=0) = 0.6$ mA.

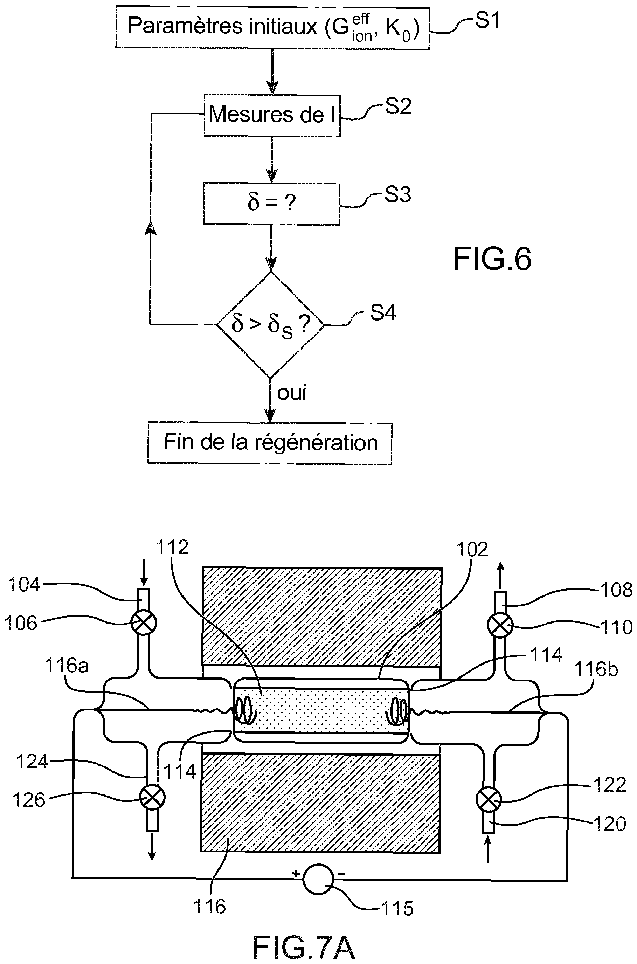

Un exemple de procédé pouvant être mis en oeuvre selon l'invention est représenté schématiquement en figure 6.

Dans une première étape (S1), un certain nombre de paramètres initiaux peuvent être mesurés ou calculés, par exemple $\sigma_{ion}^{eff}$, $k_0$, $C_1$. On peut en déduire $\frac{\Delta E}{K_0}\sigma_{ion}^{eff}$ et $\frac{1}{C_1 S2F}$.

Des mesures de I sont ensuite réalisées (étape S2), notamment pour $I_p = I(dI/dt=0)$ ou encore pour $Ip \propto I_{inst\Delta E=0}$.

A partir de ces valeurs mesurées, la valeur $\delta$ peut être estimée ou calculée (étape S3).

En fonction du résultat de la comparaison de cette valeur avec une valeur seuil $\delta_s$, il peut être décidé d'arrêter la régénération ou de la continuer (étape S4). Dans ce dernier cas, on continue les mesures de I (étape S2).

Une régénération selon l'invention peut être mise en oeuvre automatiquement au bout d'une certaine durée d'utilisation du guetteur. A cette fin, elle peut être déclenchée par les moyens 17 programmés à cet effet, par exemple sur la base d'un signal d'horloge. En variante, on met en oeuvre un test d'application de potentiel, par exemple pendant une durée de 5 à 10 secondes, et une mesure du courant $I_m$ ; par ailleurs, on estime un courant $I_E$ en fonction du potentiel appliqué et de la longueur régénérée estimée (application de la loi d'Ohm): si le courant ainsi estimé $I_E$ est supérieur au courant mesuré $I_m$ alors on déclenche la régénération.

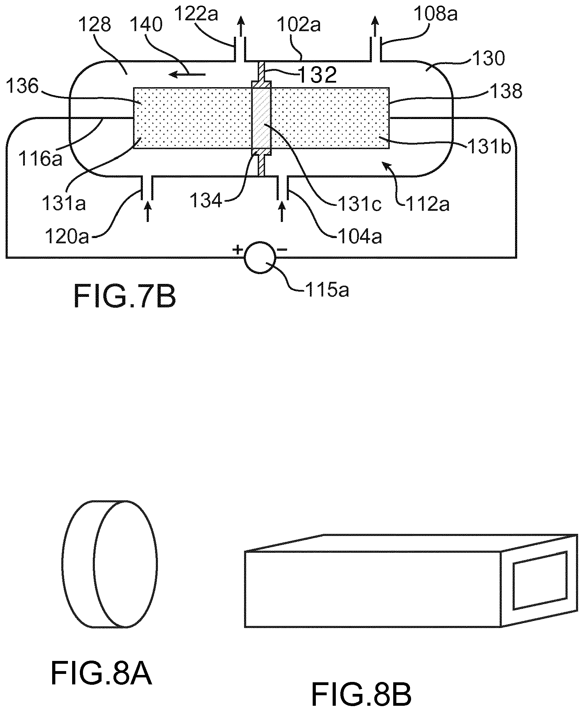

On a représenté en figures 7A et 7B 2 dispositifs auxquels l'invention peut être appliquée, ces dispositifs sont décrits dans le document FR 2230402.

Le dispositif de la figure 7A comporte une enceinte 102, des moyens d'admission du gaz à purifier, comprenant un raccord 104 commandé par une vanne 106 et des moyens d'évacuation de ce gaz hors de l'enceinte, comprenant un raccord 108 commandé par une vanne 110. A l'intérieur de l'enceinte, un bloc 112 poreux de matériau getter, par exemple formé d'une solution solide telle que définie ci-dessus. Le gaz, admis par le raccord 104, ne peut être évacué par le raccord 108 qu'après avoir traversé le bloc poreux 112.

Ici, l'enceinte 102 et le bloc 112 ont tous deux des formes générales cylindriques, le bloc étant maintenu en position dans cette enceinte, par exemple par l'intermédiaire de zones étranglées 114 formées dans l'enceinte.

Le bloc 112 est inséré dans un circuit électrique comprenant un générateur de courant continu ou redressé 115 dont les bornes sont connectées électriquement aux extrémités opposées du bloc, par exemple par l'intermédiaire de conducteurs métalliques 116a, 116b simplement mis en contact avec l'électrolyte solide. Dans l'enceinte expérimentale de la figure 7A ils sont noyés dans les extrémités du bloc 112, leur fixation ayant été réalisée notamment par cofrittage avec ce bloc, lors de la formation de celui-ci.

Un four 116 entoure l'enceinte 102, du moins la partie de celle-ci dans laquelle est placé le bloc 112, ce four étant apte à porter la solution solide à la température à laquelle il présente des conductivités ionique et électronique notables, par exemple de l'ordre de 600°C à 800°C, lorsque le bloc est formé de la solution solide contenant les oxydes respectivement de zirconium, d'yttrium et de cérium, notamment dans les proportions sus indiquées.

L'appareil comprend également des moyens d'émission, comportant notamment un raccord 120 et une vanne 122, d'un gaz inerte ou d'hydrogène dans l'enceinte ainsi que des moyens d'évacuation de ces gaz comportant notamment un raccord 124 et une vanne 126, ces derniers moyens d'admission et d'évacuation étant de préférence disposés de façon telle que le gaz introduit soit amené à circuler dans la direction opposée à celle normalement empruntée par le gaz à épurer dans une étape antérieure.

L'appareil ainsi établi fonctionne alors de la façon suivante.

Dans un premier stade, on procède à la transformation de la solution solide du bloc 112 dans sa "forme réduite", notamment en faisant passer à travers le bloc un courant électrique, dont le sens résulte de l'indication des polarités + et - respectivement associées aux conducteurs 116a et 116b. Cette étape est réalisée en estimant la longueur de régénération selon la présente invention.

Pendant cette opération, les vannes 106 et 110 sont fermées, tandis que les vannes 122 et 126 sont ouvertes et autorisent la traversée du bloc poreux par un gaz tel que l'azote ou un gaz neutre mais aussi l'hydrogène, qui entraine l'oxygène libéré par l'opération de réduction électrochimique.

Cette opération de réduction peut s'accompagner d'un noircissement de la masse poreuse.

Au terme de cette opération, l'alimentation du circuit électrique est interrompue.

Le piège à oxygène est alors en état de fonctionner, notamment dans les conditions suivantes.

Les vannes 122 et 126 sont fermées, et les vannes 106 et 110 sont ouvertes, ces dernières autorisant alors l'admission du gaz à épurer dans l'enceinte, par l'intermédiaire du raccord 104, son passage au contact du bloc poreux 112 et son évacuation par l'intermédiaire du raccord 110.

Les traces d'oxygène que contenait le gaz à épurer, sont alors énergiquement fixées par la solution solide du bloc 112.

Selon le document FR 2230402, l'observation de la coloration de ce dernier permet d'estimer le moment à partir duquel sa capacité d'adsorption est épuisée, car il ne redevient blanc que lorsqu'il est complètement réoxydé.

Mais, en fait, cela n'est pas réalisable en cours de procédé, du fait de la température ; c'est ce problème que résout la présente invention.

Grâce au suivi du courant $I_m$ proposé ici, il est possible d'observer le niveau de réduction ou de ré-oxydation comme le montre par exemple la figure 5.

L'adsorption de l'oxygène est rapide, quel que soit le degré d'oxydation de la solution solide, et notamment que la vitesse d'adsorption de l'oxygène n'est pas sensiblement affectée par ce degré d'oxydation tant que celui-ci se trouve inférieur à la valeur qu'il présente dans les solutions solides naturelles.

Lorsque ce degré d'oxydation maximum est atteint, on régénère la solution solide, en la transformant dans sa forme réduite, dans les conditions qui ont été indiquées ci-dessus dans le cadre de la présente invention.

Le piège qui vient d'être décrit est donc apte à fonctionner en discontinu.

On a représenté en figure 7B une variante de ce piège à oxygène, cette variante étant susceptible de fonctionner en continu. On a affecté les différentes parties de l'appareil de la figure 7B avec les mêmes chiffres de référence, cependant affectés d'un indice, que les parties correspondantes de l'appareil de la figure 7A. Seules les parties distinctes sont désignées par de nouveaux chiffres de référence.

L'appareil de la figure 7B se distingue essentiellement celui de la figure 5A en ce que l'enceinte 102a est divisée en deux compartiments 128 et 130 distincts, en ce que le bloc 112a comprend deux parties 131a, 131b respectivement établies dans les compartiments 128, 130, et en ce qu'une séparation étanche est réalisée entre les deux compartiments et entre les susdites parties 131a, 131b, sans que les gaz au contact de l'une de ces dernières puissent diffuser à l'état gazeux dans l'autre à travers la masse du bloc.

Avantageusement les parties 131a, 131b du bloc 112a sont poreuses; et séparées par une partie centrale 131c compacte ou massive, la séparation des deux compartiments 128, 130 étant réalisée par l'intermédiaire d'une cloison 132 dans laquelle est ménagée une ouverture centrale livrant passage au bloc 112a, dans la partie centrale de celui-ci, un joint, par exemple en émail, réalisant l'étanchéité entre la partie centrale 131c et les bords de l'ouverture de la cloison 132.

Le bloc 112a est inséré dans un circuit électrique comprenant un générateur de courant 115a, dont la borne positive est connectée à l'extrémité 136 et la borne négative à l'extrémité 138 du bloc 112a, dans les compartiments 128 et 130 respectivement.

L'admission du gaz à épurer se fait par l'intermédiaire du raccord 104a dans le compartiment 130, le gaz purifié étant évacué par l'intermédiaire du raccord 108a, tandis qu'un gaz inerte est introduit dans le compartiment 128, par l'intermédiaire d'un raccord 120a et évacué hors du compartiment 128 par l'intermédiaire du raccord 122a.

Les traces d'oxygène contenues dans le gaz introduit dans le compartiment 130 sont donc retenues dans la partie correspondante du bloc 112a, sous la forme d'ions, lesquels migrent dans la masse du bloc poreux, notamment dans la direction générale indiquée par la flèche 140, lorsque le générateur est mis sous tension, ces ions oxygènes étant transformés en atomes d'oxygène gazeux à proximité de l'extrémité 136 du bloc 112a au contact du conducteur 116a, auquel il cède ses électrons.

Un gaz neutre, ou réducteur, comme l'hydrogène de balayage introduit dans le compartiment 128 par l'intermédiaire du raccord 120a, entraîne l'oxygène gazeux, ou la vapeur, formé(e) vers le raccord d'évacuation 122a.

Par conséquent, l'invention permet notamment de mettre en application une purification en mode continu.

Elle permet également, à tout moment, de connaitre le niveau de ré-oxydation et donc de contrôler au mieux le système, qu'il soit en fonctionnement discontinu ou continu.

L'invention a été décrite avec un barreau 2 cylindrique plein, mais d'autres formes d'échantillons peuvent être mises en oeuvre.

Plus généralement, le matériau du piège 2 a une forme allongée, par exemple cylindrique ou parallélépipédique.

En variante, il peut avoir la forme d'une pastille (figure 8A) ou d'un tube creux, à section circulaire ou rectangulaire ou carrée (cas de la figure 8B). Les électrodes appliquées à l'échantillon (telles que les électrodes 7, 9 de la figure 2) ont une forme adaptée à celle de l'échantillon.

Quelle qu'en soit la forme, l'échantillon peut être constitué d'un matériau qui peut être poreux, ou dense.

Le gaz à purifier avec le guetteur peut être de l'hydrogène, ou tout autre gaz neutre, par exemple du type utilisé dans le domaine de la microélectronique, tel que l'argon, ou l'hélium, ou encore l'azote.

Des exemples d'application de l'invention sont les suivants:

- l'épuration de polluants tels que $CO_2$, $H_2O$, CO et NO dans un gaz vecteur neutre ou hydrogène,
- L'épuration de He ou $H_2$ pour l'analyse par chromatographie en phase gazeuse (CPG),
- l'épuration de $H_2$ pour le stockage d'hydrogène hydrure,
- l' épuration de $H_2$ pour une utilisation par des pile à combustible,
- l'épuration de $H_2$ pour des procédés de la microélectronique,
- l'épuration de gaz neutre comme l'argon ou l'azote pour toute utilisation industrielle.

**Revendications**

1. Procédé de régénération par courant électrique d'un piège à oxygène, comportant au moins les étapes suivantes:

   a) faire circuler un courant électrique dans le matériau (2) du piège, pour réduire ce dernier,
   b) mesurer la valeur $I_m$ dudit courant électrique et estimer sa dérivée $dI_m/dt$ par rapport au temps,
   c) estimer la longueur ($\delta$) de matériau, qui est réduite par ledit courant électrique, en fonction de la valeur dudit courant ($I_m$) et de sa dérivée ($dI_m/dt$),
   d) arrêter la circulation du courant électrique lorsque la longueur de matériau réduit est au moins égale à une valeur seuil ($\delta_s$).

2. Procédé selon la revendication 1, dans lequel la longueur de matériau réduit est fonction du rapport $I_m^2/(dI_m/dt)$ entre le carré du courant mesuré et sa dérivée.

3. Procédé selon la revendication 1, dans lequel on mesure ou on estime en outre la contribution, au courant électrique mesuré, des réductions électrochimiques des polluants de l'environnement du piège, et on estime la longueur ($\delta$) de matériau, qui est réduite, en fonction de la valeur du courant électrique mesuré ($I_m$), de sa dérivée ($dI_m/dt$) et de la contribution, au courant électrique mesuré, des réductions électrochimiques des polluants.

4. Procédé selon la revendication 1 ou 3, dans lequel:

   - on mesure en outre la valeur du courant électrique (Ip =I(dI/dt=0)) pour une dérivée nulle ou proche de zéro de celui-ci, et dans lequel on estime la longueur de matériau réduit en fonction de la valeur dudit courant ($I_m$), de sa dérivée ($dI_m/dt$) et de la valeur du courant (Ip = I(dI/dt=0)) pour une dérivée nulle ou proche de zéro de celui-ci,
   - ou on estime la valeur instantanée (maximale) du courant électrique lors de l'interruption de celui-ci,
   - ou on estime la contribution, au courant électrique mesuré, des réductions électrochimiques des polluants de l'environnement par voltamétrie rapide, ou par technique de créneaux de potentiel, ou par spectroscopie d'impédance complexe à basses fréquences.

5. Procédé selon la revendication 4, dans lequel la longueur de matériau est fonction du rapport $I_m(I_m-I_P)/(dI_m/dt)$ entre, d'une part, le produit du courant électrique et du courant électrique corrigé de sa valeur lorsque celui-ci est sensiblement constant et, d'autre part, la dérivée du courant.

6. Procédé selon l'une des revendications 3 à 5, dans lequel on interrompt la circulation du courant électrique et on mesure de la valeur du courant ($I_p$ =I(dI/dt=0)), pour une dérivée nulle ou proche de zéro de celui-ci.

7. Procédé selon la revendication 6, dans lequel l'interruption du courant et la mesure de la valeur du courant électrique ($I_p$ = (dI/dt=0)), pour une dérivée nulle ou proche de zéro de celui-ci, sont effectuées à intervalles de temps réguliers, par exemple comprise entre 20s et 100s.

8. Procédé selon l'une des revendications 1 à 7, dans lequel la régénération a lieu à une température comprise entre 600°C et 900°C.

9. Procédé selon l'une des revendications 1 à 8, dans lequel le matériau du piège une solution solide ZrYO ou ZrScO, ou une structure à base de $ThO_2^-$ et $LaGaO_3^-$, avec ou sans double substitutions de $Y_2O_3$ ou $Sc_2O_3$ par $CeO_2$ ou $Al_2O_3$, ou un mélange $8(Y_2O_3)10(Al_2O_3)$

10. Dispositif de régénération par courant électrique d'un piège à oxygène (2), comportant au moins:

    a) des moyens (3-5, 7-9) pour faire circuler un courant électrique dans le matériau du piège, pour réduire ce dernier,
    b) des moyens (6) pour mesurer la valeur dudit courant électrique et calculer sa dérivée par rapport au temps,
    c) des moyens (16-19) pour estimer la longueur de matériau qui a été réduit en fonction de la valeur dudit courant électrique et de sa dérivée ,
    d) des moyens (8) pour arrêter la circulation du courant électrique lorsque la longueur de matériau réduit est égale à une valeur seuil.

**11.** Dispositif selon la revendication 10, comportant en outre des moyens (6,17-19) pour mesurer ou estimer la contribution, au courant électrique mesuré, des réductions électrochimiques des polluants de l'environnement du piège, et pour estimer la longueur ($\delta$) de matériau, qui est réduite, en fonction de la valeur du courant mesuré ($I_m$), de sa dérivée ($dI_m/dt$) et de la contribution, au courant mesuré, des réductions électrochimiques des polluants.

**12.** Dispositif selon la revendication 10 ou 11, comportant en outre des moyens :

- pour mesurer la valeur du courant électrique ($Ip = I(dI/dt=0)$) pour une dérivée nulle ou proche de zéro de celui-ci, et pour estimer la longueur de matériau réduit en fonction de la valeur dudit courant ($I_m$), de sa dérivée ($dI_m/dt$) et de la valeur du courant ($Ip = I(dI/dt=0)$) pour une dérivée nulle ou proche de zéro de celui-ci,
- ou pour estimer la valeur instantanée (maximale) du courant électrique lors de l'interruption de celui-ci,
- ou pour estimer la contribution, au courant mesuré, des réductions électrochimiques des polluants de l'environnement par voltamétrie rapide, ou par technique de créneaux de potentiel, ou par spectroscopie d'impédance complexe à basses fréquences,

et, éventuellement, des moyens pour interrompre la circulation du courant électrique et pour mesurer la valeur du courant ($I_p = I(dI/dt=0)$), pour une dérivée nulle ou proche de zéro de celui-ci.

**13.** Dispositif selon l'une des revendications 10 à 12, comportant en outre des moyens pour déclencher, sur la base d'un signal d'horloge ou d'une comparaison entre un courant estimé en fonction d'un potentiel appliqué et le courant électrique mesuré, les moyens pour faire circuler un courant électrique dans le matériau du piège, afin de réduire ce dernier.

**14.** Dispositif selon l'une des revendications 10 à 13, dans lequel le matériau du piège comporte :

- une solution solide ZrYO ou ZrScO, ou une structure à base de $ThO_2^-$ et $LaGaO_3^-$, avec ou sans double substitutions de $Y_2O_3$ ou $Sc_2O_3$ par $CeO_2$ ou $Al_2O_3$, ou un mélange $8(Y_2O_3)10(Al_2O_3)$ ;
- ou une solution à base de Zirconium telle que $Zr_{1-x}Y_xO_{2-x/2}$ ou $Zr_{1-x}Sc_xO_{2-x/2}$ pour x compris entre 0.03 et 0.11,
- ou une solution solide à double substitution, comme $ZrO_2(0.86)Y_2O_3(0.1)CeO_2$ (0.04) ou $ZrO_2(0.9)Y_2O_3(0.09)CeO_2(0.01)$.

**15.** Dispositif selon l'une des revendications 10 à 14, dans lequel le matériau du piège :

- a une forme allongée, par exemple cylindrique ou parallélépipédique, éventuellement creux, ou a la forme d'une pastille ou d'un tube creux, par exemple à section circulaire ou rectangulaire ou carrée ;
- et/ou est dense ou poreux.

**Patentansprüche**

**1.** Regenerierungsverfahren zum Regenerieren einer Sauerstofffalle durch elektrischen Strom, umfassend die nachfolgenden Schritte:

a) Einleiten eines elektrischen Stroms in das Material (2) der Falle, um letzteres zu reduzieren,
b) Messen des Werts $I_m$ des elektrischen Stroms und Abschätzen seiner Ableitung $dI_m/dt$ bezüglich der Zeit,
c) Abschätzen der Materiallänge ($\delta$), die durch den elektrischen Strom in Abhängigkeit von dem Wert des Stroms ($I_m$) und seiner Ableitung ($dI_m/dt$) reduziert wird,
d) Unterbrechen der Einleitung von elektrischem Strom, wenn die reduzierte Materiallänge zumindest gleich einem Schwellwert ($\delta_s$) ist.

**2.** Verfahren nach Anspruch 1, wobei die reduzierte Materiallänge Funktion ist vom Verhältnis $I_m^2/(dI_m/dt)$ zwischen dem Quadrat des gemessenen Stroms und seiner Ableitung.

**3.** Verfahren nach Anspruch 1, wobei ferner der Einfluss elektrochemischer Reduktionen von Schadstoffen der Umgebung des Falle auf den gemessenen, elektrischen Strom gemessen bzw. abgeschätzt wird und die Materiallänge ($\delta$), die reduziert wird, in Abhängigkeit von dem Wert des gemessenen elektrischen Stroms ($I_m$), seiner Ableitung ($dI_m/dt$) und dem Einfluss elektrochemischer Reduktionen von Schadstoffen auf den gemessenen elektrischen Strom geschätzt wird.

4. Verfahren nach Anspruch 1 oder 3, wobei:

- der Wert des elektrischen Stroms (Ip = I(dI/dt = 0)) bei einer Ableitung desselben von null oder nahe bei null gemessen wird und bei dem die reduzierte Materiallänge in Abhängigkeit von dem Wert des Stroms ($I_m$), seiner Ableitung ($dI_m/dt$) und von dem Wert des Stroms (Ip = I(dI/dt = 0) bei einer Ableitung desselben von null oder nahe bei null geschätzt wird,
- oder der momentane (maximale) Wert des elektrischen Stroms bei Unterbrechung desselben geschätzt wird,
- oder der Einfluss von elektrochemischen Reduktionen von Schadstoffen der Umgebung auf den gemessenen elektrischen Strom durch schnelle Voltametrie oder durch Anwendung von Spannungsimpulsen oder durch komplexe Impedanzspektroskopie mit niedrigen Frequenzen geschätzt wird.

5. Verfahren nach Anspruch 4, wobei die Materiallänge Funktion von dem Verhältnis $I_m(I_m-Ip)/(dI_m/dt)$ zwischen einerseits dem Produkt aus elektrischem Strom und aus um seinen Wert korrigiertem Strom, wenn dieser im Wesentlichen konstant ist, und andererseits der Ableitung des Stroms ist.

6. Verfahren nach einem der Ansprüche 3 bis 5, wobei das Fließen von elektrischem Strom unterbrochen wird und der Wert des Stroms ($I_p$= I(dI/dt=0)) bei einer Ableitung desselben von null oder nahe bei null gemessen wird.

7. Verfahren nach Anspruch 6, wobei die Unterbrechung des Stroms und die Messung des Werts des elektrischen Stroms ($I_p$=(dI/dt = 0)) bei einer Ableitung desselben von null oder nahe bei null in gleichmäßigen Zeitintervallen beispielsweise zwischen 20 s und 100 s erfolgen.

8. Verfahren nach einem der Ansprüche 1 bis 7, wobei die Regenerierung bei einer Temperatur zwischen 600°C und 900°C erfolgt.

9. Verfahren nach einem der Ansprüche 1 bis 8, wobei das Material der Falle eine feste ZrYO- oder ZrScO-Lösung oder ein Gefüge auf Basis von $ThO_2$ und $LaGaO_3$ ist, mit oder ohne zweifache Substitutionen von $Y_2O_3$ oder Sc2O3 durch $CeO_2$ oder $Al_2O_3$ oder einem Gemisch $8(Y_2O_3)10(Al_2O_3)$.

10. Regenerierungsvorrichtung zum Regenerieren einer Sauerstofffalle (2) durch elektrischen Strom, zumindest enthaltend:

a) Einrichtungen (3 - 5, 7 - 9) zum Einleiten eines elektrischen Stroms in das Material der Falle, um letzteres zu reduzieren,
b) Einrichtungen (6) zum Messen des Werts des elektrischen Stroms und Berechnen seiner Ableitung bezüglich der Zeit,
c) Einrichtungen (16 - 19) zum Abschätzen der Materiallänge ($\delta$), die reduziert wird, in Abhängigkeit von dem Wert des elektrischen Stroms und seiner Ableitung,
d) Einrichtungen (8) zum Unterbrechen des Fließens von elektrischem Strom, wenn die reduzierte Materiallänge zumindest gleich einem Schwellwert ist.

11. Vorrichtung nach Anspruch 10, ferner enthaltend Einrichtungen (6, 17 - 19) zum Messen bzw. Abschätzen des Einflusses von elektrochemischen Reduktionen von Schadstoffen der Umgebung der Falle auf den gemessenen elektrischen Strom und zum Abschätzen der Materiallänge ($\delta$), die reduziert wird, in Abhängigkeit von dem Wert des gemessenen Stroms ($I_m$), seiner Ableitung ($dI_m/dt$) und des Einflusses elektrochemischer Reduktionen von Schadstoffen auf den gemessenen Strom.

12. Vorrichtung nach Anspruch 10 oder 11, ferner enthaltend Einrichtungen zum:

- Messen von dem Wert des elektrischen Stroms (Ip = I(dI/dt = 0)) bei einer Ableitung desselben von null oder nahe bei null und Abschätzen der reduzierten Materiallänge in Abhängigkeit von dem Wert des Stroms ($I_m$), seiner Ableitung ($dI_m/dt$) und von dem Wert des Stroms (Ip = I(dI/dt = 0) bei einer Ableitung desselben von null oder nahe bei null,
- oder zum Messen des momentanen (maximalen) Werts des elektrischen Stroms bei Unterbrechung desselben,
- oder zum Abschätzen des Einflusses von elektrochemischen Reduktionen von Schadstoffen der Umgebung auf den gemessenen Strom durch schnelle Voltametrie oder durch Anwendung von Spannungsimpulsen oder durch komplexe Impedanzspektroskopie mit niedrigen Frequenzen,

und gegebenenfalls Einrichtungen zum Unterbrechen des Fließens von elektrischem Strom und zum Messen von dem Wert des Stroms (Ip=I(dI/dt=0)) bei einer Ableitung desselben von null oder nahe bei null.

13. Vorrichtung nach einem der Ansprüche 10 bis 12, ferner enthaltend Einrichtungen zum Auslösen der Einrichtungen zum Einleiten eines elektrischen Stroms in das Material der Falle auf Basis eines Zeitsignals oder eines Vergleichs zwischen einem in Abhängigkeit von einer angelegten Spannung geschätzten Strom und dem gemessenen elektrischen Strom, um das genannte Material zu reduzieren.

14. Vorrichtung nach einem der Ansprüche 10 bis 13, wobei das Material der Falle enthält:

- eine feste ZrYO- oder ZrScO-Lösung oder ein Gefüge auf Basis von $ThO_2$ und $LaGaO_3$, mit oder ohne zweifache Substitutionen von $Y_2O_3$ oder $Sc_2O_3$ durch $CeO_2$ oder $Al_2O_3$ oder einem Gemisch $8(Y_2O_3)10(Al_2O_3)$;
- oder eine Lösung auf Basis von Zirkonium, wie etwa $Zr_{1-x}Y_xO_{2-x/2}$ oder $Zr_{1-x}Sc_xO_{2-x/2}$, wobei x zwischen 0.03 und 0.11 beträgt,
- oder eine feste Lösung mit zweifacher Substitution, wie $ZrO_2(0.86)Y_2O_3(0.1)CeO_2(0.04)$ oder $ZrO_2(0.9)Y_2O_3(0.9)Y_2O_3(0.09)CeO_2(0.01)$.

15. Vorrichtung nach einem der Ansprüche 10 bis 14, wobei das Material der Falle

- eine längliche, beispielsweise zylindrische oder quaderförmige, gegebenenfalls hohle Form oder die Form einer Tablette oder eines Hohlrohrs hat, beispielsweise mit kreisförmigem oder rechteckförmigem oder quadratischem Querschnitt;
- und/oder dicht oder porös ist.

**Claims**

1. Method to regenerate an oxygen trap using an electric current, comprising at least the following steps:

a) circulating an electric current in the trap material (2) to reduce this material;
b) measuring the value $I_m$ of said electric current and estimating its derivative $dI_m/dt$ in relation to time;
c) estimating the length ($\delta$) of material reduced by said electric current, as a function of the value of said current ($I_m$) and of its derivative ($dI_m/dt$);
d) stopping circulation of the electric current when the length of reduced material is at least equal to a threshold value ($\delta_s$).

2. Method according to claim 1 wherein the length of reduced material is a function of the ratio $I_m^2/(dI_m/dt)$ between the square of the measured current and its derivative.

3. Method according to claim 1 wherein a measurement or estimate is calculated of the contribution, to the measured current, made by electrochemical reductions of pollutants in the environment of the trap, and the length ($\delta$) of reduced material is estimated as a function of the value of the measured current ($I_m$), of its derivative ($dI_m/dt$) and of the contribution to the measured current, made by electrochemical reductions of pollutants.

4. Method according to claim 1 or 3 wherein:

- the value is also measured of the current (Ip =I(dI/dt=0)) for a zero or near-zero derivative thereof, and wherein the length of reduced material is estimated as a function of the value of said current ($I_m$), of its derivative ($dI_m/dt$) and of the value of the current (Ip = I(dI/dt=0)) for a zero or near-zero derivative thereof;
- or the instant (maximum) value is estimated of the electric current when it is interrupted;
- or the contribution to the measured electric current by electrochemical reductions of environment pollutants is estimated via fast-scan voltammetry, or by square-wave potential technique or by low frequency complex impedance spectroscopy.

5. Method according to claim 4 wherein the length of material is a function of the ratio $I_m(I_m - I_P)/(dI_m/dt)$ between, on the one hand, the product of the electric current and of the electric current corrected for the current value when the current is substantially constant, and, on the other hand, the derivative of the current.

6. Method according to one of claims 3 to 5 wherein the circulation of electric current is interrupted and the value of the current ($I_p = I(dI/dt=0)$) is measured for a zero or near-zero derivative thereof.

7. Method according to claim 6 wherein the interruption of the current and measurement of the value of the current ($I_p = (dI/dt=0)$), for a zero or near-zero derivative thereof, are performed at regular time intervals for example between 20s and 100s.

8. Method according to one of claims 1 to 7 wherein regeneration takes place at a temperature between 600°C and 900°C.

9. Method according to one of claims 1 to 8 wherein the trap material is a solid ZrYO or ZrScO solution, or a $ThO_2^-$ and $LaGaO_3^-$ based structure with or without double substitutions of $Y_2O_3$ or $Sc_2O_3$ by $CeO_2$ or $Al_2O_3$, or a $8(Y_2O_3)10(Al_2O_3)$ mixture.

10. A device to regenerate an oxygen trap (2) using an electric current comprising at least:

    a) means (3-5, 7-9) to circulate an electric current in the trap material to reduce this material;
    b) means (6) to measure the value of said electric current and to calculate its derivative in relation to time;
    c) means (16-19) to estimate the length of material that is reduced as a function of the value of said electric current and its derivative;
    d) means (8) to stop circulation of the electric current when the length of reduced material is equal to a threshold value.

11. Device according to claim 10 further comprising means (6, 17-19) to measure or estimate the contribution, to the measured electric current, made by electrochemical reductions of pollutants in the environment of the trap, and to estimate the length ($\delta$) of material reduced as a function of the value of the measured current ($I_m$), of its derivative ($dI_m/dt$) and of the contribution, to the measured current, made by electrochemical reductions of pollutants.

12. Device according to claim 10 or 11 further comprising means:

    - to measure the value of the electric current ($Ip = I(dI/dt=0)$) for a zero or near-zero derivative thereof, and to estimate the length of reduced material as a function of the value of said current ($I_m$), of its derivative ($dI_m/dt$) and of the value of the current ($Ip = I(dI/dt=0)$) for a zero or near-zero derivative thereof;
    - or to estimate the instant (maximum) value of the electric current when it is interrupted;
    - or to estimate the contribution to the measured current made by electrochemical reductions of pollutants in the environment, using fast-scan voltammetry, or using square-wave potential technique or using complex low frequency impedance spectroscopy;
    - and possibly means to interrupt the circulation of the current and to measure the value of the current ($I_p = I(dI/dt=0)$) for a zero or near-zero derivative thereof.

13. Device according to one of claims 10 to 12, further comprising means which, on the basis of a clock signal or of a comparison between a current estimated as a function of an applied potential and the measured current, trigger means to cause an electric current to circulate in the trap material for reduction thereof.

14. Device according to one of claims 10 to 13, wherein the trap material comprises:

    - a solid ZrYO or ZrScO solution, or a $ThO_2^-$ and $LaGaO_3^-$ based structure with or without double substitutions of $Y_2O_3$ or $Sc_2O_3$ by $CeO_2$ or $Al_2O_3$, or a $8(Y_2O_3)10(Al_2O_3)$ mixture;
    - or a zirconium solution such as $Zr_{1-x}Y_xO_{2-x/2}$ or $Zr_{1-x}Sc_xO_{2-x/2}$ with x between 0.03 and 0.11;
    - or a solid solution with double substitution such as $ZrO_2(0.86)Y_2O_3(0.1)CeO_2$ (0.04) or $ZrO_2(0.9)Y_2O_3(0.09)CeO_2(0.01)$.

15. Device according to one of claims 10 to 14 wherein the trap material:

    - is of elongate shape e.g. cylindrical or parallelepiped, optionally hollow, or in the form of a pellet or hollow tube for example with circular, or rectangular or square cross-section;

- and/or the trap material is dense or porous.

FIG.1

FIG.2

$R_{ini}$ Ar850 = 102 $\Omega$
$R_{ini}$ ArH850 = 229 $\Omega$
$R_{ini}$ ArH900 = 142 $\Omega$
$R_{ini}$ Ar 900 = 66 $\Omega$ (première réduction)

FIG.3

FIG.4

FIG.5

Paramètres initiaux ($G_{ion}^{eff}$, $K_0$) —S1

Mesures de I —S2

$\delta = ?$ —S3

**FIG.6**

$\delta > \delta_S$ ? —S4

oui

Fin de la régénération

**FIG.7A**

FIG.7B

FIG.8A

FIG.8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3963597 A

- FR 2230402

**Littérature non-brevet citée dans la description**

- **J. FOULTIER et al.** *Vacuum,* 1975, vol. 25, 307

- *Actualités chimie,* Juillet 1974, 24-28